# EUROPÄISCHE PATENTANMELDUNG

(11) **EP 0 772 031 A1**
(43) Veröffentlichungstag der Anmeldung: **07.05.1997**
(21) Anmeldenummer: 96115918.3
(22) Anmeldetag: 04.10.1996
(51) Int. Cl.: G01K 7/18

(54) **Widerstandsthermometer**

(30) Priorität: 30.10.1995 DE 19540194
(71) Anmelder: Heraeus Sensor GmbH, D-63450 Hanau (DE)
(72) Erfinder: Wienand, Karlheinz, Dr., 63741 Aschaffenburg (DE); Dietmann, Stefan, 72221 Haiterbach (DE); Söll, Eva, 60318 Frankfurt (DE)
(74) Vertreter: Kühn, Hans-Christian

(57) **Zusammenfassung**

Die Erfindung betrifft ein Widerstandsthermometer mit einem Meßwiderstand in Form einer im wesentlichen aus einem Metall der Platingruppe, vorzugsweise aus Platin, bestehenden Widerstandsschicht, die auf einer elektrischen isolierenden Oberfläche eines Trägers mit einem Wärmeausdehnungskoeffizienten im Bereich von 8,5 bis 10,5 ppm/K aufgebracht und mit einer elektrisch isolierenden Abdeckschicht versehen ist. Der Träger der Widerstandsschicht kann folgendermaßen ausgebildet sein:
a) als ein Substrat aus einem Werkstoff, das im wesentlichen aus Magnesiumtitanat besteht oder
b) als eine auf diesem Substrat aufgebrachte Zwischenschicht aus Aluminiumoxid oder Magnesiumoxid.

Mit dem Widerstandsthermometer ist es möglich, eine hohe Langzeitstabilität im oberen Temperaturbereich (oberhalb 500°C) zu erzielen.

## Beschreibung

Die Erfindung betrifft ein Widerstandsthermometer mit einem Meßwiderstand in Form einer im wesentlichen aus einem Metall der Platingruppe bestehenden Widerstandsschicht in einer Dicke von 0,1 bis 10 µm, die auf einer elektrisch isolierenden Oberfläche eines Trägers mit einem Wärmeausdehnungskoeffizienten im Bereich von 8,5 bis 10,5 ppm/K aufgebracht ist und mit einer elektrisch isolierenden Abdeckschicht versehen ist.

Aus DE 24 50 551 ist ein Widerstandsthermometer mit einer Platin-Widerstandsschicht bekannt, die auf einer Unterlage, bestehend aus einem Aluminiumoxidträger und einer darauf angeordneten, dünnen Zwischenschicht, aufgebracht ist. Die Zwischenschicht besteht aus Oxiden der Gruppe Lanthan, Yttrium, Cer, Titan und Eisen bzw. aus Mischungen der vorgenannten Metalloxide und hat die Funktion, die Fehlanpassung in der Wärmeausdehnung zwischen dem Aluminiumoxidträger und der Platin-Widerstandsschicht auszugleichen. Problematisch bei diesen Zwischenschichten ist jedoch, daß unter- oder überstöchiometrische Oxide bei höheren Temperaturen ihre elektrisch isolierende Eigenschaft verlieren und dies zu Meßwertbeeinflussungen bei dem Widerstandsthermometer führt.

Weiterhin ist aus DE 25 27 739 ein Verfahren zur Herstellung eines elektrischen Meßwiderstandes für ein Widerstandsthermometer bekannt, bei dem der Meßwiderstand auf einem Träger aus keramischem Material einen durch Zerstäubung hergestellten Platindünnfilm in vorgegebener Form aufweist, der einen vorbestimmten Temperaturkoeffizienten enthält. Dabei wird als Träger eine solche Keramik verwendet, deren mittlerer thermischer Ausdehnungskoeffizient sich von demjenigen des Thermometerplatins um weniger als ± 30 % unterscheidet. Dieses keramische Ausgangsmaterial für Substrate von durch Aufstäuben hergestellte Platindünnschichtwiderstände für Widerstandsthermometer wird in sauerstoffhaltiger Atmosphäre so weit erhitzt, daß das Substrat nach der Wärmebehandlung weniger als 15 ppm Chrom, weniger als 30 ppm Eisen weniger als 45 ppm Blei und weniger als 70 ppm Silizium in mit Platin reaktionsfähiger Form enthält. Bei gleichzeitiger Anwesenheit aller vorgenannter Metalle überschreitet die Summe der Verunreinigungen durch diese Metalle nicht 20 ppm, wobei das in einer Dicke von 0,1 bis 10 µm mit Platin beschichtete Substrat bei einer Temperatur im Bereich von 1000 °C bis 1400 °C während mindestens 60 Minuten in sauerstoffhaltiger Atmosphäre erhitzt wird. Das Substrat besteht entweder aus Aluminiumoxid, Berylliumoxid, Thoriumoxid, Magnesiumoxid oder einem Magnesiumsilikat. Das Substrat wird während der Beschichtung einer Temperatur im Bereich von 500 °C bis 900 °C ausgesetzt. Vorzugsweise wird Aluminiumoxidkeramik als Substrat eingesetzt, wobei die Platinschicht eine Dicke von 1 bis 5 µm aufweist.

In DE 40 26 061 wird die Herstellung eines elektrischen Meßwiderstandes mit vorgegebenem Temperaturkoeffizienten, insbesondere für Widerstandsthermometer offenbart, wobei auf ein Substrat ein Platindünnfilm als Widerstandsschicht aufgedampft oder aufgestäubt wird, auf dem im Siebdruckverfahren ein Rhodiumsulforesinat enthaltendes Präparat aufgebracht und engebrannt wird, so daß das Rhodium in die Platinwiderstandsschicht gleichmäßig verteilt eindringt. Bei Einsatz eines Metallsubstrates weist die dem Platindünnfilm zugewandte Seite des Substrates eine elektrisch isolierende Zwischenschicht aus Glaskeramik auf.

Aus DE 43 00 084 ist ein Widerstandsthermometer mit einem Platin-Meßwiderstand in einer Dicke von 0,1 bis 10 µm bekannt. Die Widerstandsschicht ist auf einer elektrisch isolierenden Oberfläche eines Trägers aufgebracht, der einen Wärmeausdehnungskoeffizienten im Bereich von 8,5 bis 10,5 ppm/K aufweist, wodurch mechanische Spannungen der aufgebrachten sensitiven Widerstandsschicht verhindert werden soll, so daß sich eine Kennliniencharakteristik wie bei einem freihängenden Meßwiderstand ergibt. Der Meßwiderstand soll dabei als Temperatursensor im Bereich von - 200 °C bis + 500 °C mit hoher Genauigkeit eingesetzt werden, wobei eine möglichst geringe Differenz zur vorgegebenen Sollwert-Kennlinie nach DIN IEC 751 erhalten wird. Die elektrisch isolierende Oberfläche wird dabei entweder durch die Oberfläche eines elektrisch isolierenden Substrates oder durch die elektrisch isolierende Oberfläche einer Glas- oder Keramikschicht gebildet. Eine bevorzugte Ausführung stellt die Verwendung eines Titansubstrates mit einer elektrisch isolierenden Glasschicht dar. Außerdem wird beschrieben, das Metallsubstrat mit einer Schicht aus Siliziumoxid, Siliziumnitrid, Aluminiumoxid, Titanoxid, Magnesiumoxid oder Magnesiumaluminiumspinell an der Oberfläche elektrisch zu isolieren.

Nachteilig dabei ist einerseits die aufwendige Prozeßführung (beispielsweise Vorreinigung der Metallsubstrate oder/und Einbrand der Glasschicht unter Stickstoff) bei der Herstellung und andererseits ist die maximale Einsatztemperatur auf 500 °C beschränkt, da durch die dünne Zwischenschicht leicht Verunreinigungen aus einem darunterliegenden metallischen Substrat zur sensitiven Platinschicht gelangen können. Aber auch bei den bekannten keramischen Substraten besteht die Gefahr der "Vergiftung" der Platinschicht, da in Verbindung mit einer reduzierenden Atmosphäre innerhalb eines Thermometergehäuses Verunreinigungen (beispielsweise aus dem Gehäusewerkstoff) zur Platinschicht vordringen und dort mit dem Platin (katalytisch) Verbindungen eingehen, so daß die Widerstandskennwerte stark verändert werden. Die Brauchbarkeit derartiger Widerstandsthermometer ist dann nicht mehr gewährleistet.

Aufgabe der Erfindung ist es, ein Widerstandsthermometer zu schaffen, das unter Beibehaltung der Vorteile der bekannten Ausführungen auch im oberen Temperaturbereich, d. h. oberhalb von 500 °C Langzeitstabilität ermöglicht. Die Kennlinie für Platin-Meßwiderstände nach DIN IEC 751 soll im Bereich von - 200 °C bis + 850 °C wiederholt möglichst exakt nachgebildet werden. Weiterhin soll auch eine Möglichkeit zum Einsatz von handelsüblichem Substrat angegeben werden.

Die Aufgabe wird erfindungsgemäß dadurch gelöst, daß als Substrat für den Platin-Meßwiderstand ein Werkstoff ausgewählt wird, der im wesentlichen aus Magnesiumtitanat besteht. Dieses Material ist mit einem mittleren thermischen Ausdehnungskoeffizienten von 8,9 ppm/K an den Ausdehnungskoeffizienten von Platin angepaßt. Dadurch werden die beim Erwärmen und Abkühlen entstehenden Verspannungen minimiert, so daß zwischen -200°C und +850°C eine Kennlinie wie nach DIN IEC 751 vorgegeben nachgebildet wird Diese Charakteristik reproduziert sich auch nach Dauerlagerungen bei Temperaturen oberhalb 500°C. Magnesiumtitanat ist darüber hinaus ein handelsüblicher Werkstoff, der allerdings sonst nur für Hochfrequenz-Bauteile oder keramische Kondensatoren Anwendung findet. Es genügt allen Anforderungen (Festigkeit, Abmessungen, Prozeßtemperaturen, etc.) hinsichtlich der Fertigungsprozeßparameter bei der Herstellung von Pt-Dünnfilmmeßwiderständen.

Als vorteilhaft hat es sich erwiesen, eine Zwischenschicht aus Al₂O₃ oder MgO auf das beschriebene Substrat aus Magnesiumtitanat aufzubringen, wenn beispielsweise die Oberflächenqualität des angebotenen Substrats für die nachfolgende Pt-Filmauftragtechnik (Aufdampfen, Aufsputtern) nicht ausreicht. Weiterhin wird eine verbesserte Haftfestigkeit für die auf die Zwischenschicht aufzubringende Widerstandsschicht erreicht. Die Widerstandsschicht besteht vorzugsweise aus Platin.

Durch diese beiden Maßnahmen (Wahl des geeigneten Substrats und gegebenenfalls Aufbringen einer Zwischenschicht) ist - neben den erläuterten Wirkungen - ein optimaler Schutz der sensitiven Platinschicht gegenüber Verunreinigungen von seiten der Unterlage und eine Anpassung im Wärmeausdehnungsverhalten gewährleistet.

Um weitere schädliche Einflüsse, beispielsweise durch Werkstoffe des äußeren Thermometergehäuses, von dem Platin-Dünnfilm fernzuhalten, wird die Platinschicht mit einer Abdeckschicht versehen. Diese Abdeckschicht soll außerdem - ebenso wie die Unterlage für die Platinschicht - im Wärmeausdehnungsverhalten möglichst nahe an der Wärmeausdehnungscharakteristik des Platins liegen, damit eine durch diesen Verbund bedingte Änderung der Widerstandskennwerte gering gehalten wird.

Zweckmäßigerweise wird für die Abdeckschicht ein Borosilikatglas verwendet, das im Siebdruckverfahren aufgebracht und eingebrannt wird. Die Dicke dieser Glas-Abdeckschicht liegt im Bereich von 10 µm bis 100 µm. Typischerweise werden Schichtdicken von 30 µm erreicht.

Zur Gewährleistung eines besonders intensiven Schutzes wird als Abdeckung ein Keramikplättchen mit einer Dicke zwischen 0,1 mm und 1 mm auf die Pt-Widerstandsschicht aufgelegt und mittels eines kaltaushärtenden, keramischen Klebers oder eines Glaslotes befestigt. Als Glaslot kann z. B. das beschriebene Borosilikatglas verwendet werden. Vorteilhafterweise besteht das Keramikplättchen aus dem gleichen Werkstoff wie das Substrat, also aus Magnesiumtitanat.

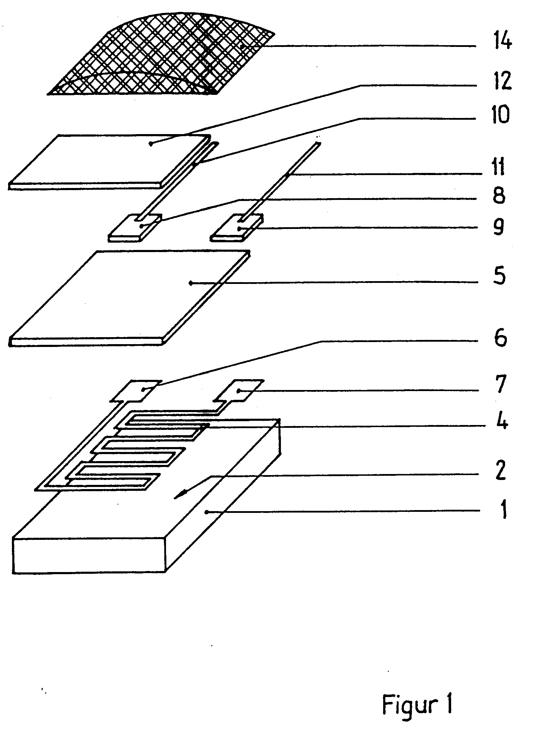

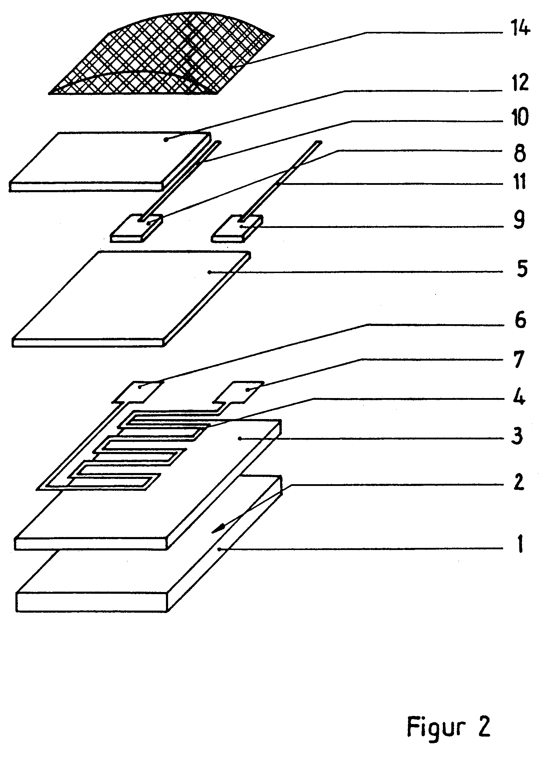

Im folgenden ist der Gegenstand der Erfindung anhand der Figuren 1 und 2 näher erläutert.

Figur 1 zeigt einen Meßwiderstand für Widerstandsthermometer, bei dem die Widerstandsschicht direkt auf der Oberfläche eines elektrisch isolierenden Substrats aufgebracht ist.

Figur 2 zeigt einen Meßwiderstand mit einer Zwischenschicht zwischen Widerstandsschicht und Substrat.

Als Substrat dient gemäß Figur 1 ein quaderförmiger Körper 1 mit einer Oberfläche 2, die der Form des aufzubringenden Meßwiderstandes 4 angepaßt ist. In der vorliegenden Ausführungsform ist die Oberfläche 2 mit einer Rauhtiefe von 20 bis 200 nm ausgebildet. Das Substrat 1 besteht aus Magnesiumtitanat (MgTiO₃). Es ist jedoch auch möglich als Werkstoff Aluminiumoxid (Al₂O₃) einzusetzen.

Auf die Oberfläche 2 des Substrats 1 wird die Widerstandsschicht 4 aus einem Metall der Platingruppe, vorzugsweise Platin, aufgebracht. Die Widerstandsschicht 4 wird durch Kathodenzerstäubung bzw. durch Aufdampfen aufgebracht und anschließend so strukturiert, daß sich die Form eines Mäanders ergibt. Die verhältsnismäßig empfindliche (und katalytisch aktive) Platin-Widerstandsschicht 4 wird durch eine Abdeckschicht 5 geschützt.

Beim Aufbringen der Abdeckschicht 5 wird im Bereich der Anschlußkontakte 6, 7 der Widerstandsschicht 4 der dazugehörige Anschlußbereich freigelassen, d.h. nicht von der Abdeckschicht 5 abgedeckt.

Für Hochtemperaturanwendungen ist als Abdeckung ein Keramikplättchen 12 in einer Dicke von 0,1 bis 1 mm vorgesehen. Das Keramikplättchen 12 hat in diesem Fall die Dicke von 0,3 mm und besteht aus Magnesiumtitanat. Das Keramikplättchen 12 wird mittels eines hochschmelzenden Glaslotes auf der Widerstandsschicht 4 bzw. auf dem Substrat 1 befestigt. Bei Anwendungen bis zu einer Temperatur von 500 °C kann das Keramikplättchen 12 auch mittels eines niederschmelzenden Glaslotes oder eines keramischen Klebers befestigt werden.

Anstelle des Keramikplättchens 12 kann die Abdeckschicht 5 auch aus einem Borosilikatglas gebildet werden, das im Siebdruckverfahren aufgetragen wird. Die Borosilikatglasschicht hat nach dem Einbrand eine Dicke im Bereich zwischen 10 und 100 µm, typischerweise von 30 µm.

An einer Seite des Substrats 1 sind in Verbindung mit der mäandrierten Widerstandsschicht 4 Kontaktflächen 8,9 angeordnet. Die Kontaktflächen 8,9 werden auch als Dickschicht-Pads bezeichnet und sind auf die Anschlußkontakte 6,7 der Widerstandsschicht 4 aufgebracht. An den Kontaktflächen 8,9 werden die äußeren Anschlußleitungen 10,11 durch Schweißen oder Bonden angebracht. Der Anschlußbereich wird durch eine auf die Kontaktflächen 8,9 und partiell auf die Abdeckschicht 5 aufgebrachte äußere Deckschicht 14 aus einem Glaskeramikwerkstoff elektrisch isoliert und zugentlastet. Als Glaskeramikwerkstoff hat sich ein keramisierendes Borosilikatglas bewährt. Seine Dicke liegt im Bereich von 0,1 bis 10 mm.

Gemäß Figur 2 ist auf die Oberfläche 2 des Substrats 1 eine elektrisch isolierende Zwischenschicht 3 aufgebracht. Die Zwischenschicht 3 ist vorzugsweise durch Kathodenzerstäubungsverfahren aufgebracht (Sputtern). Es ist jedoch auch möglich sie durch Aufdampfen oder in Siebdrucktechnik aufzubringen. Die Zwischenschicht 3 gleicht Oberflächenfehler des Substrats 1 aus und überbrückt als Pufferschicht eine leichte Ausdehnungsfehlanpassung zwischen der darauf autzubringenden Widerstandsschicht 4, die vorzugsweise aus Platin besteht, und der Oberfläche 2 des Substrates 1 bei gleichzeitiger Reduktion der katalytischen Aktivität des Platins. Die Zwischenschicht 3 besteht aus Aluminiumoxid oder Magnesiumoxid. Die Zwischenschicht dient gleichzeitig als Haftvermittler zwischen dem Substrat 1 und der aufzubringenden Widerstandsschicht 4. Bei einem Substrat aus Magnesiumtitanat hat es sich als besonders vorteilhaft erwiesen als Zwischenschicht 3 Aluminiumoxid vorzusehen.

Der weitere Aufbau des Widerstandsthermometers entspricht hinsichtlich Abdeckschicht 5, Anschlußkontaktflächen 6,7 , Kontaktflächen 8,9 ,Anschlußleitungen 10, 11, äußere Deckschicht 14 und Keramikplättchen 12 der mit Figur 1 erläuterten Ausführung.

Beim Aufbringen der Abdeckschicht wird demnach im Bereich der Anschlußkontakte 6,7 der Widerstandsschicht 4 der zugehörige Anschlußbereich freigelassen, d.h. nicht von der Abdeckschicht 5 abgedeckt. Für Anwendungen im Hochtemperaturbereich wird ein Keramikplättchen 12 mittels Hochtemperaturglaslot aufgelötet. Bei Anwendungen bis zu einer Temperatur von 500°C kann das Keramikplättchen 12 auch mittels eines niederschmelzenden Gaslotes oder eines keramischen Klebers befestigt werden.

Die Anschlüsse 6, 7 der Widerstandsschicht 4 werden über Kontaktflächen 8, 9 mit äußeren Anschlußleitungen 10, 11 verbunden. Der Anschlußbereich wird durch eine auf die Kontaktflächen 8, 9 und auf die Abdeckschicht 5 aufgebrachte äußere Deckschicht 14 aus einem Glaskeramikwerkstoff elektrisch isoliert und zugentlastet.

In einer vereinfachten Version ist es möglich, auf das äußere Keramikplättchen 12 zu verzichten, beispielsweise beim Einsatz in einem eingeschränkten Temperaturbereich von 0°C bis 600°C.

## Patentansprüche

1. Widerstandsthermometer mit einem Meßwiderstand in Form einer im wesentlichen aus einem Metall der Platingruppe bestehenden Widerstandsschicht in einer Dicke von 0,1 bis 10 µm, die auf einer elektrisch isolierenden Oberfläche eines Trägers mit einem Wärmeausdehnungskoeffizienten im Bereich von 8,5 bis 10,5 ppm/K aufgebracht ist und mit einer elektrisch isolierenden Abdeckschicht versehen ist, dadurch gekennzeichnet, daß als Träger ein Substrat (1) aus im wesentlichen Magnesiumtitanat vorgesehen ist.

2. Widerstandsthermometer nach Anspruch 1, dadurch gekennzeichnet, daß zwischen dem Substrat (1) und der Widerstandsschicht (4) eine Zwischenschicht (3) aufgebracht ist.

3. Widerstandsthermometer nach Anspruch 1 oder 2, dadurch gekennzeichnet, daß die Abdeckschicht (5) aus einem Borosilikatglas besteht.

4. Widerstandsthermometer nach Anspruch 3, dadurch gekennzeichnet, daß das Borosilikatglas eine Dicke im Bereich von 10 µm bis 100 µm aufweist.

5. Widerstandsthermometer nach Anspruch 1 oder 2, dadurch gekennzeichnet, daß die Abdeckschicht (5) ein Keramikplättchen (12) aus dem Werkstoff des Substrats (1) ist.

6. Widerstandsthermometer nach Anspruch 5, dadurch gekennzeichnet, daß das Keramikplättchen (12) eine Dicke von 0,1 bis 1 mm aufweist.

7. Widerstandsthermometer nach Anspruch 5 oder 6, dadurch gekennzeichnet, daß das Keramikplättchen (12) als Abdeckschicht (5) mittels eines keramischen Klebers oder eines Glaslotes auf der Widerstandsschicht (4) und dem Substrat (1) befestigt ist.

8. Widerstandsthermometer nach Anspruch 2, dadurch gekennzeichnet, daß die Zwischenschicht (3) aus Aluminiumoxid oder Magnesiumoxid besteht.
